(19) **Europäisches Patentamt**

**European Patent Office**

**Office européen des brevets**

(11) **EP 0 825 208 A2**

(12) **EUROPÄISCHE PATENTANMELDUNG**

(43) Veröffentlichungstag:
25.02.1998 Patentblatt 1998/09

(51) Int. Cl.⁶: **C08F 279/02**
// (C08F279/02, 212:08)

(21) Anmeldenummer: 97113455.6

(22) Anmeldetag: **05.08.1997**

(84) Benannte Vertragsstaaten:
**AT BE CH DE DK ES FI FR GB GR IE IT LI LU MC NL PT SE**

(30) Priorität: **16.08.1996 DE 19632926**

(71) Anmelder: **BAYER AG**
**51368 Leverkusen (DE)**

(72) Erfinder:
- **Brandt, Heinz-Dieter, Dr.**
  **47877 Willich (DE)**
- **Stollfuss, Bernd**
  **51467 Bergisch Gladbach (DE)**

(54) **Verfahren zur Herstellung thermoplastischer, spannungsrissbeständiger Formmassen**

(57) Die nach dem erfindungsgemäßen Verfahren hergestellten Formmassen aus Styrol und speziellem Polybutadien zeichnen sich durch eine exzellente Schlagzähigkeit und Spannungsrißbeständigkeit kombiniert mit sehr guter Oberflächenbeschaffenheit der daraus hergestellten Formkörper aus.

EP 0 825 208 A2

**Beschreibung**

Die Erfindung betrifft ein Verfahren Zur Herstellung schlagfester thermoplastischer Formmassen durch Polymerisation von Aryl-substituiertem Ethylen in Gegenwart von Polybutydien. Die nach diesem Verfahren hergestellten Formmassen finden Verwendung zur Herstellung von Formkörpern, vornehmlich durch Spritzguß.

Kautschukmodifizierte Polymerisate besitzen eine gegenüber unmodifizierten Polymerisaten verbesserte Schlagzähigkeit und Spannungsrißbeständigkeit.

Die üblichste Methode zur Herstellung solcher kautschukmodifizierten Polymerisate ist die Polymerisation des Monomers in Gegenwart von Kautschuk. HIPS ("high impact polystyrene") und ABS (Acrylnitril/Butadien/Styrol-Copolymerisate) sind die bekanntesten Vertreter: Übersicht in Ullmanns Enzyklopädie der technischen Chemie, 4. Aufl. Bd. 19, 226 f., Verlag Chemie, Weinheim 1980; Angew. Chem. 93,372 (1981). Zur Modifizierung wird als Kautschuk meistens Polybutadien eingesetzt.

Es ist bekannt, daß Gebrauchsgegenstände aus schlagfest modifizierten Styrolpolymerisaten gegen Spannungsrißkorrosion anfällig sind, sobald sie mit auslösenden Agenzien in Berührung kommen. Als solche kommen zahlreiche organische Medien in Frage. Besonders bekannt als spannungsrißauslösende Medien sind dabei einerseits Fette und Öle, andererseits organische Treibmittel, wie z. B. die Fluor und Chlor enthaltenen Halogenkohlenwasserstoffe. Ersteres macht sich bei der Verpackung von Lebensmitteln in Polystyrol, letzteres z. B. bei der Herstellung von Kühlmöbeln aus schlagfestem Polysyrol nachteilig bemerkbar. So reißen Verpackungsbecher aus schlagfestem Polystyrol, in denen Margarine enthalten ist, beim Übereinanderstapeln am Boden leicht radial auf, während Kühlschrankinnenbehälter dieses Schicksal beim Hinterschäumen mit Polyurethan-Schaum durch das dabei verwendete Halogenkohlenwasserstoff-Treibmittel erleiden.

Diese nachteilige Eigenschaft schränkt die Einsatzmöglichkeiten von schlagfestem Polystyrol auf diesen Sektoren ein. Zu ihrer Vermeidung ist man entweder gezwungen, durch aufwendige technische Verfahren, z. B. durch Einlegen von Zwischenschichten beim Hinterschäumen der Kühlschrankinnenbehälter, den Werkstoff vor dem Angriff des aggressiven Mediums zu schützen, oder man weicht auf kostspieligere Werkstoffe aus, wie z. B. Styrol-Acrylnitril-Copolymerisate, die durch Polydienen schlagfest modifiziert sind (sogenannte ABS Polymerisate).

Es ist auch bereits der Versuch unternommen worden, durch nachträgliche Beigabe von weiterem Kautschuk die Spannungsrißbeständigkeit von schlagfest modifizierten Styrolpolymerisaten zu verbessern. Doch konnte selbst bei hohen Dosierungen von Kautschuk nur ein geringer Effekt beobachtet werden. Aufgabe der vorliegenden Erfindung war des demzufolge, mit Kautschuk schlagfest modifizierte Styrolpolymerisate zu finden und herzustellen, die eine erhöhte Spannungsrißbeständigkeit besitzen.

Aus DE-AS 17 20 972 ist ein Verfahren zur Herstellung von schlagfesten, thermoplastischen Kunstharzen durch Pfropfpolymerisation von aromatischen Monovinylverbindungen und synthetischen Kautschuk bekannt. Weiterhin sind aus DE-OS 22 52 851 Kunststoffmassen mit hoher Stoß- und Schlagzähigkeit auf der Basis von monovinylaromatischen Polymeren bekannt. Die in den genannten Schriften beschriebenen Kunststoffmassen besitzen sowohl eine verbesserte Stoß- und Schlagzähigkeit als auch Spannungsrißbeständigkeit, die aber noch verbesserungswürdig ist.

Aus dem Stand der Technik ist weiterhin die Verwendung von mit Hilfe von Lithium Katalysatoren hergestellten Kautschuken (Li-BR) bekannt. Nachteil dieser Kautschuke ist die zu hohe Pfropfaktivität, die zu hohen Gelgehalten führt. Die Kautschukpartikel weisen deshalb einen zu hohen Anteil an Okklusionen auf. Die Spannungsrißbeständigkeit wird dadurch verschlechtert. Weiterhin neigt Li-BR bei den üblichen im Prozeß verwendeten Entgasungstemperaturen zur Übervernetzung, was die Schlagzähigkeit erheblich vermindert.

Weiterhin ist Stand der Technik die Verwendung von mit Hilfe von Kobalt-Katalysatoren hergestellten Kautschuken (Co-BR). Diese Art Kautschuke weisen einen zu hohen cold flow und eine zu hohe Klebrigkeit auf, die zu handling- und Verarbeitungsproblemen führen. Weiterhin neigt Co-BR zur Bildung von hardspots (= Fehlstellen, übervernetzte kompakte Kautschukteilchen), die sich insbesondere durch Fehlstellen auf der Oberfläche von Formkörpern hergestellt durch Extrusion negativ bemerkbar machen. Diese Art Fehlstellen reduzieren auch die Schlagzähigkeit.

Überraschenderweise wurde nun gefunden, daß bei Verwendung eines bestimmten Dien-Kautschuk bzw. einer Dien-Kautschukmischung schlagfeste thermoplastische Formmassen mit verbesserter Spannungsrißbeständigkeit erhalten werden. Diese Dien-Kautschuke bzw. Kautschukmischungen zeichnen sich durch eine hervorragende Verarbeitbarkeit und die daraus hergestellten thermoplastischen Formmassen durch exzellente Schlagzähigkeit und Spannungsrißbeständigkeit kombiniert mit sehr guter Oberflächenbeschaffenheit daraus hergestellter Formteile aus.

Gegenstand der Erfindung ist also ein Verfahren zur Herstellung thermoplastischer Formmassen durch Polymerisation von Aryl-substituiertem Ethylen, das dadurch gekennzeichnet ist, daß man

I. 75 bis 99 Gewichtsteile Styrol mit

II. 1 bis 25 Gewichtsteilen Polybutadien aus

A. 50 bis 100 Gew.-%, bezogen auf Komponente II, Polybutadien mit mindestens 90 % cis-1,4-Verknüpfungen, einer Lösungsviskosität (LV) von mehr als 100 bis 10 000 mPas,
einer Mooney-Viskosität (MV) von 30 bis 80 ML (1+4) 100°C und einem Quotienten
MV/LV
von weniger als 0,8 und

B. 0 bis 50 Gew.-%, bezogen auf Komponente II, Polybutadien mit 5 bis 25 % 1,2-Verknüpfungen, einer Lösungsviskosität (LV) von 20 bis 300 mPas, einer Mooney-Viskosität (MV) von 30 bis 100 ML (1+4) 100°C und einem Quotienten
MV/LV
von 0,3 bis 2,0

in üblicher Weise polymerisiert.

Das eingesetzte Polybutadien (Komponente A) mit einem hohen Anteil an cis-1.4-Verknüpfungen und den anderen anspruchsgemäß geforderten Parametern kann mit metallorganischen Mischkatalysatoren hergestellt werden, wie sie beispielsweise in der EP-A 7027 und 11 184 beschrieben sind.

Solche Mischkatalysatoren enthalten Mischungen oder Umsetzungsprodukte aus mindestens einem Carboxylat der Seltenen Erden, mindestens einem Dialkylaluminiumhydrid oder Aluminiumtrialkyl und mindestens einer Lewis-Säure. Bevorzugte Seltene Erden sind Lanthan, Cer, Praseodym und Neodym sowie deren Mischungen, wobei Neodym und Neodym/Praseodym-Mischungen besonders bevorzugt sind.

Geeignet sind auch Polybutadiene (Komponente A), die im Laufe ihres Herstellungsprozesses mit Hilfe der sogenannten Mooney-Sprung-Reaktion modifiziert werden. Hierbei werden geeignete Reagentien mit der reaktiven Polymerkette zur Reaktion gebracht. Derartige geeignete, modifizierte Polybutadiene sind in der EP-A 406.920 und in der deutschen Anmeldung P 4 436 059.2 beschrieben.

Als Polybutadiene (Komponente B) des erfindungsgemäßen Verfahrens werden solche eingesetzt, die auf Basis von Li-Katalysatoren hergestellt worden sind. Die Herstellung dieser Li-Polybutadiene ist bekannt und in "Ullmann's Encyclopedia of Industrial Chemistry" Vol. A 23, S. 271 - 276 und in der dort zitierten Literatur beschrieben.

Die Lösungsviskosität der Polybutadiene wird an einer 5 gew.-%igen Lösung des Dienpolymerisats in Styrol mit einem Brookfield-Viskosimeter bei 25°C gemessen (Brookfield-RV, Synchro-Lectric, Modell LVT, Spindel 2, Drehzahl fest einstellbar, je nach Viskosität: 6, 12, 30, 60 Upm).

Die Bestimmung der Mooney-Viskosität erfolgt nach DIN 53 523.

Der Quotient ML/LV kann als ein Maß für die sog. Langkettenverzweigung der Polybutadiene betrachtet werden.

Die nach dem erfindungsgemäßen Verfahren hergestellten Formmassen eignen sich zur Herstellung von Formkörpern, durch Spritzguß und insbesondere Extrusion.

## Beispiele

### Verwendete Produkte

Polybutadien HX 529 SIC ist ein Handelsprodukt der Bayer AG, Leverkusen; es ist ein Li-Polybutadien mit folgenden Eigenschaften:

38 % cis-1,4-Verknüpfungen
51 % trans-1,4-Verknüpfungen
11% 1,2-Verknüpfungen
LV = 170mPas
MV = 55ML (1+4) 100°C
MV/LV = 0,32

Polybutadien CB 24 ist ein Handelsprodukt der Bayer AG, Leverkusen; es ist ein Nd-Polybutadien mit folgenden Eigenschaften:

≥98 % cis-1,4-Verknüpfungen
≤1 % trans-1,4-Verknüpfungen
≤1 % 1,2-Verknüpfungen
LV = 165mPas
MV = 44 ML (1+4) 100°C

MV/LV = 0,27

Polybutadien CB 1415 ist ein Handelsprodukt der Bayer AG, Leverkusen; es ist ein Co-Polybutadien mit folgenden Eigenschaften:

$\geq$96 % cis-1,4-Verknüpfungen
$\leq$2 % trans-1,4-Verknüpfungen
$\leq$2 % 1,2-Verknüpfungen
LV = 150 mPas
MV = 45 ML (1+4) 100°C
MV/LV = 0,3

Polybutadien HX 502 ist ein Handelsprodukt der Bayer AG, Leverkusen; es ist ein Li-Polybutadien mit folgenden Eigenschaften:

LV = 90 mPas
MV = 38 ML (1+4) 100°C
MV/LV = 0,42

Vergleichsversuche 1 + 2 und Beispiel 1 + 2

Unter $N_2$-Atmosphäre werden

6 Teile Polybutadienn (s. Tabelle)
0,2 Teile $\alpha$-Methylstyrol-Dimere und
0,5 Teile Vulkanox KB$^{\circledR}$ in
0,4 Teilen Styrol (stabilisiert) gelöst.

1 200 g dieser Lösung werden in einem 2 l Glasautoklaren mit Wendelrührer 15 Minuten mit $N_2$ gespült. Innerhalb von 1 Stunde wird auf 120°C aufgeheizt und 4,5 Stunden bei dieser Temperatur gerührt (8o Upm). Die erhaltene hochviskose Lösung wird in drucksichere Formen aus Aluminium gefüllt und nach folgendem Zeit/Temperaturprogramm polymerisiert:

2,5 h bei 125°C
1,5 h bei 135°C
1,5 h bei 145°C
1,5 h bei 165°C
2,5 h bei 225°C

Nach dem Abkühlen wird das Polymerisat zerkleinert und 20 Stunden bei 100°C im Vakuum entgast. Zur Prüfung werden die Proben auf einer Spritzgußmaschine verspritzt. Die mechanischen Werte werden an Normkleinstäben bestimmt.

ESCR (environmental stress cracking resistance) bestimmt man nach Daten erhalten aus dem Zugversuch nach folgender Formel:

$$ESCR = \frac{\text{Zugfestigkeit - Yield Spannung}}{\text{Yield Spannung}} \times 100$$

Je höher der Wert um so höher die Spannungsrißbeständigkeit.

Tabelle 1

| Versuch | Polybutadien | LV[1] [mPas] | (MFR 200°C, 5 kg) [g/10min] | An, 23°C [kJ/m$^2$] | Am,- 40°C [kJm$^2$] | ESC R |
|---|---|---|---|---|---|---|
| Vergleichsversuch 1 | HX 529 SIC | 350 | 7,5 | 53,3 | 46,3 | 5,2 |
| Vergleichsversuch 2 | CB 1415 | 347 | 6,4 | 65,0 | 59,6 | 11,1 |
| Beispiel 1 | CB 24 | 336 | 5,6 | 64,0 | 45,6 | 10,0 |
| Beispiel 2 | CB 24/HX 502 C (4 Teile/2 Teile) | 311 | 6,1 | 50,9 | 59,4 | 3,2 |

[1] Lösungsviskosität (nach Brookfield) des Ansatzes vor der Polymerisation

Die Harze wurden zu Bändern extrudiert (2 cm x 0,2 cm). Die Zahl der Fehlstellen wurde auf einer Länge von 50 cm ausgezählt.

| Produkt | Anzahl Fehlstellen |
|---|---|
| Vergleichsversuch 1 | 8 |
| Vergleichsversuch 2 | 4 |
| Beispiel 1 | 1 |

**Patentansprüche**

1. Verfahren zur Herstellung thermoplastischer Formmassen durch Polymerisation von Aryl-substituiertem Ethylen, dadurch gekennzeichnet, daß man

I. 75 bis 99 Gewichtsteile Styrol mit

II. 1 bis 25 Gewichtsanteilen Polybutadien aus

A. 50 bis 100 Gew.-%, bezogen auf Komponente II, Polybutadien mit mindestens 90 % cis-1,4-Verknüpfungen, einer Lösungsviskosität (LV) von mehr als 100 bis 10 000 mPas, einer Mooney-Viskosität (MV) von 30 bis 80 ML (1+4) 100°C und einem Quotienten
MV/LV
von weniger als 0,8 und

B. 0 bis 50 Gew.-%, bezogen auf Komponente II, Polybutadien mit 5 bis 25 % 1,2-Verknüpfungen, einer Lösungsviskosität (LV) von 20 bis 300 mPas,
einer Mooney-Viskosität (MV) von 30 bis 100 ML (1+4) 100°C und einem Quotienten
MV/LV
von 0,3 bis 2,0

in üblicher Weise polymerisiert.